# EUROPEAN PATENT SPECIFICATION

(11) **EP 2 247 340 B1**
(45) Date of publication and mention of the grant of the patent: **01.11.2017**
(21) Application number: 08776405.6
(22) Date of filing: 26.02.2008
(51) Int. Cl.: A62B 7/14, B64D 13/02

(54) **AIRCRAFT BREATHING SYSTEM USING OBOGS**
ATEMSYSTEM FÜR FLUGZEUGE MIT SAUERSTOFFGENERATOR
CIRCUIT D'OXYGÈNE DE BORD D'AÉRONEFS UTILISANT DES SYSTÈMES DE GÉNÉRATION D'OXYGÈNE EMBARQUÉS

(43) Date of publication of application: 10.11.2010
(73) Proprietor: Zodiac Aerotechnics, 78373 Plaisir Cedex (FR)
(72) Inventor: GILLOTIN, Vincent, F-91430 Vauhallan (FR); MAILLOT, Jean-Pierre, F-78690 Les Essarts Le Roi (FR); SENEGAS, David, F-78370 Plaisir (FR)
(74) Representative: Cabinet Plasseraud
(86) International application number: PCT/IB2008/051806
(87) International publication number: WO 2009/106936

(56) References cited:
- US-A- 4 651 728
- US-A- 5 069 692
- US-A1- 2007 062 371

## Description

### Field of the invention

The invention relates to the field of oxygen-rich gas breathing systems and is more particularly concerned with an apparatus for providing oxygen-rich gas for breathing by aircrew and passengers of commercial aircraft.

### Background of the invention

It is a requirement in passenger carrying aircraft that oxygen be provided for breathing by flight crew, cabin crew and passengers, particularly in emergency situations such as cabin decompression. It is also a requirement that oxygen be available for continuous breathing by one of the aircrew flying the aircraft during flight above 12000 meters to provide protection against the effect of altitude in the event of instantaneous cabin decompression. Ideally oxygen for the latter requirement should be made available without depleting the stored oxygen source for the emergency system.

The passenger system is designed to provide protection against cabin decompression at altitude and is required to provide oxygen for up to 10 minutes duration while the aircraft descends to a safe altitude of 3000 meters. For this purpose, chlorate candle or gaseous oxygen are used as source of breathing gas.

The development of new air routes in certain areas of the world presents a problem because some parts of these routes are over mountainous terrain which does not permit descent to 3000 meters in the event of cabin decompression. This gives rise to a requirement for oxygen to be made available for use at altitudes up to 6000 meters over longer periods which may be forty minutes or more. For deviation over 10 minutes, chlorate candles are unreliable and the additional cylinders for storage of gaseous oxygen gives rise to weight and space penalties.

Systems using gaseous oxygen stored in cylinders require frequent servicing and recharging to maintain pressure, such servicing and recharging being accomplished either on the aircraft from a ground source or by replacement of cylinders.

For all these reasons, there was a need to replace oxygen reservoirs by another means.

In military aircraft, the breathing masks of the crew members are connected to onboard oxygen generating system, or OBOGS. An OBOGS has molecular sieve absorber beds or oxygen concentrators controlled to deliver breathable gas enriched with oxygen to a percentage concentration suitable for meeting aircrew breathing requirements during normal flight operation from ground level to maximum aircraft operating altitude of 18300 meters (60000 feet) with a pressurized cabin. Breathable gas in this concentration range is increased in pressure by a pressure intensifier or compressor before being delivered to a storage tank from which it is supplied to an aircrew member by way of a breathing regulator and a face mask. Regulation means adapt the use of OBOGS to the different needs during a flight. US patents 4 960 119, 4 428 372, 4 651 728 and 5 199 423 disclose different types of breathing system using OBOGS as source of oxygen.

However, during the different stages of use, the pressure of the gas outputted by the compressor may rise up to a maximum level. This situation may arise when the storage tank is full and the crewmember uses only a part of what is produced by the OBOGS. Therefore, there is a need for a safety valve to limit the pressure to the predetermined maximum level. However, when the safety valve is open, the oxygen goes out and is diluted in the atmosphere. As producing oxygen is an energy intensive process, this is wastefulness.

Otherwise, US patent 5 069 692 discloses a device according to the preamble of claim 1.

### Summary of the invention

However, there is a need to regulate the output pressure of the compressor without oxygen wasting.

To better address one or more concerns, in a first aspect of the invention, a device for delivering a breathing gas to an on-demand breathing mask comprises
- an Onboard Oxygen Generator comprising an oxygen-rich gas outlet end;
- compressor means comprising inlet means and outlet means, said inlet means being connected to oxygen-rich gas outlet end of said Onboard Oxygen Generator for receiving said gas, said compressor means being operable to increase the pressure of said gas for delivery from said outlet means to the on-demand breathing mask, and
- a connecting means connecting said compressor outlet means to said compressor inlet means, the connecting means comprising a pressure limiting valve so that oxygen-rich gas in excess at the outlet means is redirected to the inlet means.

In a particular embodiment a pressure regulator is positioned between the gas outlet end of the Onboard Oxygen Generator and the compressor inlet means.

Depending on the type of device, a particular embodiment may be preferred as easier to adapt. Aspects of these particular embodiments may be combined or modified as appropriate or desired, however.

### Brief description of the drawings

These and other aspects of the invention will be apparent from and elucidated with reference to the embodiment described hereafter in relation with annexed figures where:

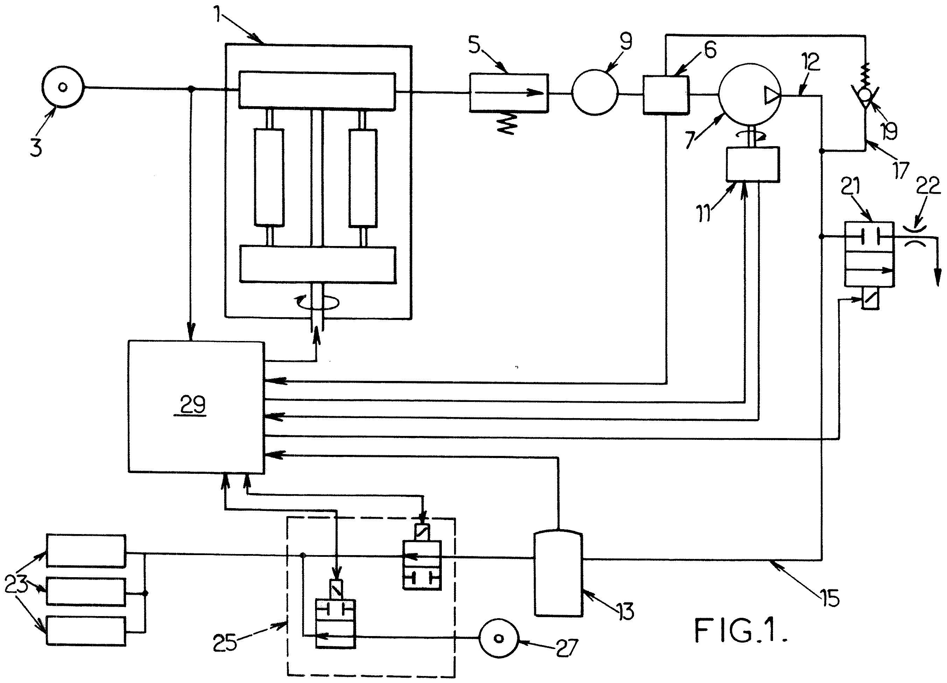

- Fig. 1 is a schematic view of an onboard oxygen generating system according to an embodiment of the invention.

### Description of embodiments of the invention

In reference to Figure 1, a system for producing oxygen-rich gas (i.e. 70-95% oxygen) for breathing on board a passenger or crew member of an aircraft comprises an Onboard Oxygen Generator 1, or OBOG. The OBOG is fed in air from a compressor stage 3 of one or more of the aircraft engines.

The oxygen-rich gas outlet of the 0BOG 1 is connected to a pressure regulator 5. The outlet of the pressure regulator 5 is connected to an inlet means of a compressor 7 through a buffer 9. The compressor 7 is operated by an electric motor 11.

An outlet means 12 of the compressor 7 is connected to a plenum 13 by a delivery line 15.

A feed back line 17 connects the outlet means 12 to the inlet means 6 of the compressor through a pressure limiting valve 19.

An on/off valve 21 connects the delivery line 15 through a calibrated port 22 to exterior at ambient pressure.

The outlet of the plenum 13 is connected to masks 23 through a priority valve 25 adapted to switch from oxygen coming from the OBOG 1 to oxygen stored on bottle 27, and *vice versa.*

A computer 29, or any electronic and/or industrial programmable logic controller, controls the system by means of sensors and actuators (not referenced).

The system works as follows.

The compressor stage 3 generates compressed air from the atmosphere surrounding the aircraft. The compressed air is typically at a maximum relative pressure of 7 bars and a maximum temperature of 400° C. The compressed air is therefore cooled down through a heat exchanger (not represented) and filtered before entering the OBOG 1.

At the OBOG output, the generated mixture contains generally more than 70% of oxygen. This mixture is called "oxygen enriched air" or OEA by the man skilled in the art.

The OEA pressure at this stage varies greatly. As the OBOG 1 is a passive apparatus, the OEA pressure varies with the pressure at the OBOG entry and the OEA demand.

The pressure regulator 5 is provided to stabilize the OEA pressure at a pressure of 200 to 300 mbar.

The buffer 9, which contains OEA at the same pressure as the pressure regulator output, smoothes the pressure variation and the draught generated by the compressor 7.

The compressor 7 is typically a small electrical compressor which increases the oxygen pressure at its output to at least 4.5 bars to feed correctly the breathing masks.

The on/off valve 21 is used to start the compressor 7 by limiting the compressor output pressure until it runs at normal speed. Thus, the valve 21 is open for few seconds at compressor start. Then, as the compressor is at its normal speed, the computer 16 closes the valve 21. The valve 21 is also used in a stand-by mode in which the OBOG 1 and the compressor 7 are running while no breathing mask is used. Therefore, there is a need to have an aperture in the output circuitry to clear OEA.

When the compressor is running, the pressure is maintained at a pressure below a predetermined safety pressure by the pressure limiting valve 19.

The oxygen in excess going through the pressure limiting valve 19 is directed to the input means 6 of the compressor 7 by the feedback line 17. This embodiment has the advantage to reduce the loss of oxygen which, otherwise, must go back to atmosphere to limit the pressure.

The plenum 13 acts as a buffer to smooth the gas demand variations from the breathing masks 23.

The priority valve 25 is used to feed the masks 23 from the bottle 27 or from the plenum 13.

Typically, during a flight accident, three phases have to be considered in term of breathing demand.

Before the pressurization accident, a crewmember breathes regularly through the breathing mask. Other crew members and passengers breathe normally the pressurized atmosphere of the aircraft. Therefore, the oxygen demand is rather low, typically around one liter per minute. The OBOG 1 and the compressor 7 work regularly.

When the depressurization accident occurs, if the aircraft is above 20000 feet (around 6000 m), the breathing system switches to the bottle 27 as breathing gas source until the aircraft altitude has dropped below 20000 feet. Everybody in the aircraft wears oxygen masks and, thus, the oxygen demand is at its maximum.

When the aircraft has flown down to the safety altitude of 20000 feet, its flight is stabilized by crewmembers until the aircraft can fly down at an altitude of around 3000 m, or around 10000 feet, before it can land to an airport.

During this period which may last for a while, the breathing source is switched to the OBOGS as source of oxygen to at least all crewmembers. Therefore, the output is around 8 liters par minute.

Consequently, the OBOGS needs to supply oxygen for the first and third phases.

During the first phase, as the oxygen demand is low, the maximum pressure occurs regularly and the feed back line 17 is used to save oxygen until the pressure at the input means 6 exceeds another predetermined level. In this case, either the valve 21 is open to withdraw oxygen in excess or the computer 16 stops the OBOG 1 and the compressor 7.

During the third phase, the oxygen consumption is such that the pressure in the delivery line 15 exceeds the predetermined level only punctually. Therefore, the feed-back line 17 is fully operational to avoid oxygen wasting.

While the invention has been illustrated and described in details in the drawings and foregoing description, such illustration and description are to be considered illustrative or exemplary and not restrictive: the invention is not limited to the disclosed embodiment.

For instance, for a large aircraft, the circuitry volume to connect the breathing masks may act as the plenum 13.

## Claims

1. Device for delivering a breathing gas to an on-demand breathing mask (23) comprising
- an Onboard Oxygen Generator (1) comprising an oxygen-rich gas outlet end ;
- compressor means (7) comprising inlet means (6) and outlet means (12), said inlet means being connected to oxygen-rich gas outlet end of said Onboard Oxygen Generator (1) for receiving said gas, said compressor means being operable to increase the pressure of said gas for delivery from said outlet means to the on-demand breathing mask, and
- connecting means (17) connecting said compressor outlet means (12) to said compressor inlet means (6),
the device being **characterized in that** said connecting means comprises a pressure limiting valve (19) so that oxygen-rich gas in excess at the outlet means is redirected to the inlet means.

2. Device according to claim 1, wherein a pressure regulator (5) is positioned between the gas outlet end of the Onboard Oxygen Generator (1) and the compressor inlet means (6).

## Patentansprüche

1. Vorrichtung zum Ausgeben eines Atemgases an eine Bedarfs-Atemmaske (23), aufweisend:
- einen bordeigenen Sauerstoffgenerator (1), der ein sauerstoffreiches-Gas-Auslassende aufweist,
- ein Kompressormittel (7), das ein Einlassmittel (6) und ein Auslassmittel (12) aufweist, wobei das Einlassmittel zum Aufnehmen des Gases mit dem sauerstoffreiches-Gas-Auslassende des bordeigenen Sauerstoffgenerators (1) verbunden ist, wobei das Kompressormittel betätigbar ist, um den Druck des Gases zum Ausgeben aus dem Auslassmittel an die Bedarfs-Atemmaske zu erhöhen, und
- ein Verbindungsmittel (17), das das Kompressor-Auslassmittel (12) mit dem Kompressor-Einlassmittel (6) verbindet,
wobei die Vorrichtung **dadurch gekennzeichnet ist, dass** das Verbindungsmittel ein Druckbegrenzungsventil (19) aufweist, so dass an dem Auslassmittel überschüssiges sauerstoffreiches Gas zu dem Einlassmittel zurückgeführt wird.

2. Vorrichtung gemäß Anspruch 1, wobei ein Druckregler (5) zwischen dem Gas-Auslassende des bordeigenen Sauerstoffgenerators (1) und dem Kompressor-Einlassmittel (6) positioniert ist.

## Revendications

1. Dispositif pour distribuer un gaz respiratoire à un masque de respiration à la demande (23) comprenant
- un générateur d'oxygène embarqué (1) comprenant une extrémité de sortie de gaz riche en oxygène ;
- un moyen compresseur (7) comprenant un moyen d'entrée (6) et un moyen de sortie (12), ledit moyen d'entrée étant raccordé à l'extrémité de sortie de gaz riche en oxygène dudit générateur d'oxygène embarqué (1) pour recevoir ledit gaz, ledit moyen compresseur pouvant être actionné pour augmenter la pression dudit gaz pour une distribution depuis le moyen de sortie vers le masque de respiration à la demande, et
- un moyen de raccordement (17) raccordant ledit moyen de sortie de compresseur (12) audit moyen d'entrée de compresseur (6),
le dispositif étant **caractérisé en ce que** ledit moyen de raccordement comprend une soupape de limitation de pression (19) de sorte qu'un excédent de gaz riche en oxygène au niveau du moyen de sortie soit redirigé vers le moyen d'entrée.

2. Dispositif selon la revendication 1, dans lequel un régulateur de pression (5) est positionné entre l'extrémité de sortie de gaz du générateur d'oxygène embarqué (1) et le moyen d'entrée de compresseur (6).
